# EUROPEAN PATENT APPLICATION

(11) **EP 3 130 927 A1**
(43) Date of publication of application: **15.02.2017**
(21) Application number: 15182522.1
(22) Date of filing: 26.08.2015
(51) Int. Cl.: G01P 3/66

(54) **METHOD AND DEVICE FOR THE CONTACTLESS MEASUREMENT OF THE MOVEMENT SPEED OF THE FERROMAGNETIC STRUCTURE**

(30) Priority: 11.08.2015 PL 41351315
(71) Applicant: Akademia Gorniczo-Hutnicza im. Stanislawa Staszica w Krakowie, 30-059 Krakow (PL)
(72) Inventor: KWASNIEWSKI, Jerzy, 30-389 Kraków (PL); GRZYBOWSKI, Józef, 35-330 Rzeszów (PL); MOLSKI, Szymon, 31-630 Kraków (PL)
(74) Representative: Wlasienko, Jozef

(57) **Abstract**

The present invention relates to a method and device for the contactless measurement of the movement speed of the objects. In the method according to the invention the structure susceptible to magnetization is placed on the tested object by means of a transmitting system comprising the magnetic field transmitter (1), which generates the pulse magnetizing the structure to form a magnetic marker (8), and that magnetizing pulse is transmitted by a terminal (12) of the transmitter (1) to the test object at the time t₀. In the next stage the signal from the magnetic marker is received by means of a magnetic field receiver (2) to record the time t₂ in which the magnetic field receiver (2) receives the magnetizing signal from the marker (8), whereupon the difference between the times t₀ and t₂ is measured by a speed analyser (7) and the movement speed of the object is determined on the basis of the previously predetermined constant path L between the transmitter (1) and the receiver (2). At the end the demagnetization of the magnetic marker (8) is performed by a demagnetiser (4) connected to the variable magnetic field generator (9).

## Description

### Field

The object of the invention is a method and device for the contactless measurement of the movement speed of the object, for example, the contactless measurement of the speed of cable-type tendons for cable transport, objects in the mining, metallurgy, etc.

### BACKGROUND ART

The patent PL208244 discloses a test method for contactless measuring of instruments for the measurement a linear velocity and a device for testing contactless measuring instruments for measurement of a linear velocity on a rotary disk intended in particular for calibrating and checking optical, inductive and capacitive measuring instruments, in which the speed is measured without contact with the substrate.

The patent PL 158892 discloses a method for measuring the speed and position of the trajectory of fast moving objects especially bullets. In the bullet trajectory light barriers are arranged, the barrier consisting of e.g., photo transistors, from which electrical signals are obtained during the passage of the bullet through two barriers, wherein their occurring time difference determines a speed of the bullet.

The patent PL210544 discloses a method and device for the absolute measurement of small flow velocities of a medium by means of an anemometer with a thermal wave. The method measures the phase shift of a sinusoidal thermal signal of a predetermined frequency generated in the flowing medium along a known path.

Patent PL 160 973 discloses a contactless system and device for measuring a displacement of the shaft relative to the body of the rotating machine, composed of the sensing probe, the main element of which is the induction coil producing a high frequency magnetic field which induces eddy currents in the testing object, and a measuring transducer comprising a high-frequency electronic generator, the element of the resonant circuit of which is a sensor induction coil, an electronic amplitude demodulator at the output of which is generated a voltage reflecting the measured length of the slot between the test object and the sensor, and an output amplifier to standardize the output signal.

Patent No PL389984 discloses a unit for measuring the speed of the object relative to the substrate, especially the speed of an object moving on snow, provided with a light emitting element and provided with photo-detection elements, and also provided with a signal processing system, wherein the photo-detection elements are arranged in series comprising at least two photo-detecting elements arranged at a distance L.

Patent PL315223 discloses a device for measuring speed of, in particular, the lift cabin which comprises optical fork fixed on the lift cabin, which contains two hollow arms disposed in one horizontal plane and including, respectively, an emitter and receiver of infra-red rays.

According to the prior art, the measurement is performed by an optical method utilizing, respectively, the emitter and receiver of infra-red rays so that the infra-red beam passes along horizontal length comprised between the two arms; at the assumed height h there are mounted a plurality of vertical markers *a* which are opaque for infra-red rays. When the beam is cut during the movement; a counting unit that receives, from a receiver located at each level, information on the life period Dt, during which the infra-red beam is interrupted by the marker mounted on each level, and calculates the speed of the cabin from the formula V = h/Dt.

Patent No PL396413 discloses a roller for measuring instruments for measurements of velocity and displacement of elements having ferromagnetic properties, used in the construction of various types of instruments for measuring parameters of movement of the element adhering frictionally to the outer surface of the roller. A roller according to the present invention comprises at least one permanent magnet which unipolarly polarizes a roller bed.

The known solutions are based on the contact measurement, in which the various types of encoders are used, where the actuator is connected to a moving structure.

The present invention is to provide a method and device for measuring the movement speed of the objects that eliminate the disadvantages occurring in the prior art.

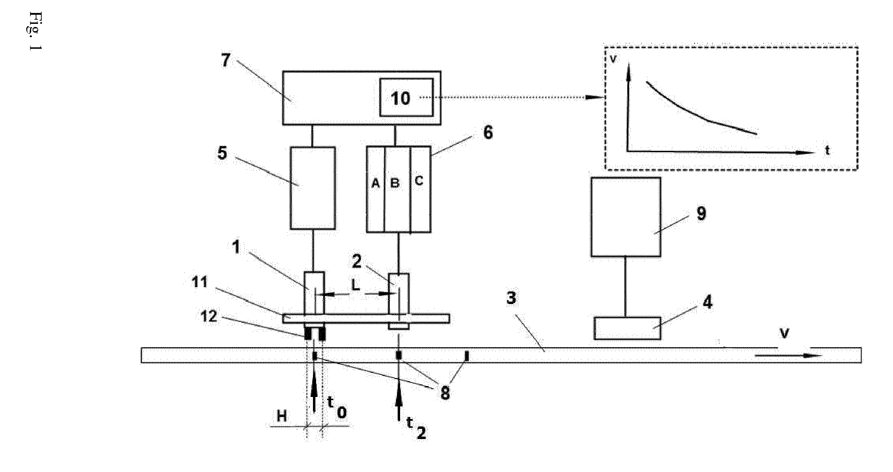

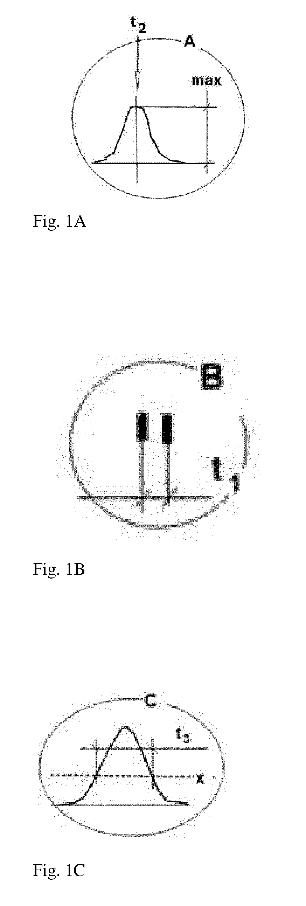

In the contactless method for measurement of a movement speed of the objects according to the invention
a ferromagnetic structure susceptible to magnetization is arranged on the test object
by means of a transmitting system comprising a magnetic field transmitter, which generates a pulse magnetizing the structure to form a magnetic marker, and that magnetizing pulse is transmitted by a terminal of the transmitter to the test object at the time t₀, whereupon
by means of the magnetic field receiver situated from the transmitter by a distance L a signal from the magnetic marker is received and the time t₂ is recorded in which the magnetic field receiver receives the signal from that marker. The time t₂ corresponds to the maximum recorded signal (Fig. 1A). Then
a difference between the times t₀ and t₂ is measured by a speed analyser and a speed movement of the object is determined on the basis of the predetermined constant path L between the transmitter and the receiver, and
demagnetization of the magnetic marker is performed by a demagnetiser connected to a variable magnetic field generator.

Preferably, a time t₃ in which signal values received by a magnetic field receiver derived from the magnetic marker are greater than a predetermined value, is determined by a pulse analyser.

Preferably, in order to place simultaneously two magnetic markers two signals are generated and these two magnetizing signals are received by means of the magnetic field receiver and the receiver records the time t₁ which elapsed between these two signals (magnetic markers).

Preferably, at equal time intervals magnetizing signals are generated which form an set of plurality of magnetic markers on the test structure.

Device for contactless measuring of the movement speed of objects according to the invention comprises a transmitting system including a transmitter of the magnetic field connected to the magnetic pulse generator and a receiving system comprising a magnetic field receiver connected to an amplitude analyser and to a speed analyser, and demagnetiser, wherein the transmitter and receiver are on a common measuring strip forming a measurement track and are spaced from each other by a predetermined distance L, while simultaneously the transmitting and receiving systems are connected to each other by means of the speed analyser, which comprises a recorder and a visualizer of the speed measurement result.

Preferably, the magnetic field transmitter is provided with at least one terminal to generate a magnetizing pulse.

Preferably, the magnetic field transmitter is provided with two terminals spaced from each other by a distance H for simultaneously generating two magnetizing pulses (markers).

### The beneficial effects of the invention

The invention uses a magnetic marker which is applied in contactless manner to the ferromagnetic element of a moving structure and hence the safety of operating properties of the used objects and quality of products are improved. This solution may also have benefits not related to the technique, it may serve to improve the organization, the management of the business systems and organizations of the industrial and transport trade. This solution includes a new concept in the field of data collection and processing.

The subject of the invention in some embodiments is shown in the drawings, in which
Figure 1 shows a diagram of a device for measuring the moving speed of the objects according to the present invention for a transmitter with two terminals,
Figure 1A shows a waveform of the magnetizing pulse (marker) and a moment of the time t₂ measurement,
Figure 1B shows the time t₁ which is measured between the two markers simultaneously generated in the transmitter,
Figure 1C shows the time t₃, which is measured as the pulse duration with the amplitude above a predetermined value x,
Figure 2 shows a diagram of a device for measuring the moving speed of the objects according to the present invention for a transmitter with one terminal.

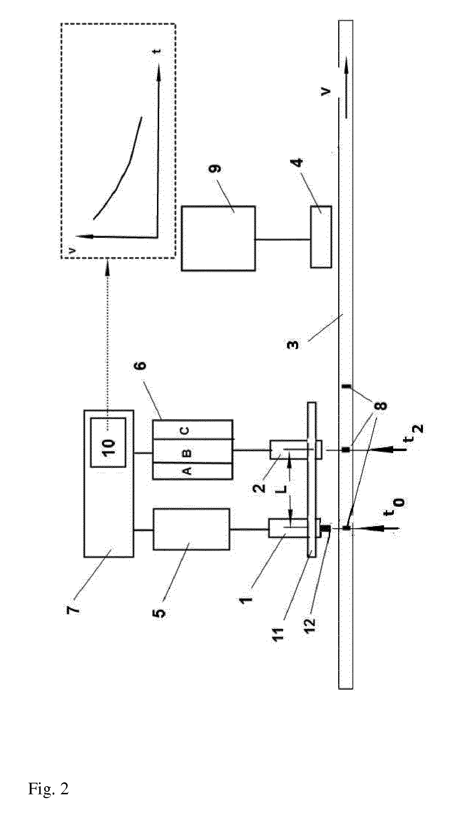

In the measurement track used to perform a measurement of the moving speed of objects a transmitting system comprising a magnetic field transmitter 1 coupled to magnetic pulse generator 5 is provided. The magnetic field receiver 2 is provided at the distance L from the transmitter in one measuring strip 11. The distance L is determined depending on the moving speed *v* of the tested structure 3. On the tested object there can be arranged a ferromagnetic structure susceptible to the magnetization, on which a magnetic marker 8 is formed under the influence of a magnetic field from a transmitter 1 generating a magnetizing pulse (marker) at time t₀. The magnetic field transmitter 1 in this embodiment (Fig. 2) is provided with one terminal 12 by means of which the magnetization of the ferromagnetic structure is performed. The transmitter 1 transmits one magnetizing signal at time t₀. When the ferromagnetic structure 3 moving with a speed *v* will be under the receiver 2, then the time t₂ is measured by the amplitude analyser 6. Then, the difference between the two time moments t₀ and t₂ which determines the moving speed of the object is determined using the analyser 6. Using the speed analyser 7, said time difference between the time moments is converted to speed values, which are next recorded and presented on the visualizer 10. After moving the marker 8 beyond the magnetic field receiver 2, it is demagnetized by the demagnetiser 4 using the variable magnetic field generator 9.

In the second version of the solution according to the invention, the measurement track is analogous to the one discussed above, but the receiver 2 is also used to measure the time duration t₃ of the pulse whose amplitude exceeds the predetermined value x (Fig. 1C).

In the third version of the solution according to the invention two magnetic markers are generated on the tested object. The pulse magnetic generator 5 can generate simultaneously a set of two magnetic pulses forming the signal pair. The transmitter 1 is provided with two terminals 12 (Fig. 1) for simultaneously generating two pulses of magnetic markers 8. Then, after moving the object under the receiver 2, the time t₁ elapsed between appearances of two consecutive markers (Fig. 1B) is measured. This time is recalculated in the speed analyser 7 to the speed value recorded and presented on the visualizer 10. The demagnetiser 4 is provided downstream the measuring track 11 which cancels the magnetic markers 8.

As the magnetic field receivers can be Hall effect sensors, thin film sensors, inductive sensors, etc.

### Application

The method and device according to the invention is widely applicable, for example:
- for contactless measurement of the speed of cable-type tendons in cable transport devices used in cable railways and ski lifts, mining shaft hoists, cranes and construction cranes, etc. The knowledge of the speed of the tested cable-type tendon is necessary to assess the real value of its wear. In the magnetic test method of steel cables the test result is dependent on the relative speed of the cable which is a drawback of that method. The signal from the measuring device is transmitted to the compensating systems resulting in making the result independent from the speed changes. Using the contactless speed measuring technique the result of the magnetic test becomes independent from the influence of erroneous measurements of the speed values performed at the moment by contact measuring devices such as encoders and resulting, for example, from occurring slippage.
- for measurements of haul ropes (poles, cable bridges, water towers) operating in harsh environmental conditions (ice, lubricants) where contact measurements do not fulfil their role due to the slippage, for example of the roller with encoder moving over the object,
- for measurements of the geometry of a variety of metal structures, for example, on sheet production lines, where the important item is the measurement of the speed, that is transmitted as a feedback in geometry measuring systems (it is possible to measure the speed of the non-metal structures by applying ferromagnetic strips thereto on which the measurement will be performed),
- for measuring the movement of steel-polyurethane ropes and cables in passenger lifts
- the signal from the device can be transmitted to the control and positioning system of the cabin in a shaft,
- for measuring the speed of relative motion - the test structure is stationary and the measuring device is in the motion.

**List of references**

| | |
|---|---|
| Magnetic field transmitter | 1 |
| Magnetic field receiver (Hall-effect sensor, thin-film sensor, inductive sensor) | 2 |
| Ferromagnetic structure moving with the speed *v* | 3 |
| Demagnetiser | 4 |
| Magnetic pulse generator (single or double pulse) | 5 |
| Analysers of | 6 |
| maximum of the signal | 6A |
| distance between two magnetic markers, | 6B |
| pulse widths for a given level of x values of the recorded pulse (of the magnetic marker) | 6C |
| Speed analyser | 7 |
| Magnetic markers | 8 |
| Variable magnetic field generator | 9 |
| Recorder and visualizer of the speed measurement result | 10 |
| Measuring strip | 11 |
| Transmitter terminals | 12 |

## Claims

1. The method of contactless measurement of the movement speed of objects **characterized in that**
a structure susceptible to magnetization is arranged on the test object by means of a transmitting system comprising magnetic field transmitter (1), which generates a pulse magnetizing the structure to form a magnetic marker (8), and that magnetizing pulse is transmitted by a terminal (12) of the transmitter (1) to the test object at the time t₀, whereupon
by means of the magnetic field receiver (2) the signal from the magnetic marker is received and the time t₂, in which the magnetic field receiver (2) receives the magnetizing signal from the marker (8) is recorded, whereupon a difference between the times t₀ and t₂ is measured by a speed analyser (7) and a movement speed of the object is determined on the basis of the previously predetermined constant path L between the transmitter (1) and the receiver (2), and then
demagnetization of the magnetic marker (8) is performed by a demagnetiser (4) connected to a variable magnetic field generator (9).

2. The method of contactless measurement of the movement speed of objects according to claim 1 **characterised in that** a time t₃ is determined by a pulse analyser (6C) in which signal values received by the magnetic field receiver (2) derived from the magnetic marker (8) are greater than a predetermined value.

3. The method of contactless measurement of the speed of moving objects according to claim 1 or 2, **characterised in that** in order to place simultaneously two magnetic markers, two magnetizing signals are generated and these two magnetizing signals are received by the magnetic field receiver (2) and the time t₁ elapsed between these two signals is recorded in analyser (6B).

4. The method of contactless measurement of the speed of moving objects according to claim 1 or **2, characterised in that** the magnetizing signals are generated at equal time intervals which form an array of a plurality of magnetic markers on the test structure.

5. The device for contactless measurements of the speed of moving objects **characterised in that** it comprises a transmitting system including the magnetic field transmitter (1) connected to the magnetic pulse generator (5) and a receiving system including the magnetic field receiver (2) connected to the amplitude analyser (6) and the speed analyser (7) and a demagnetizer (4) connected to the variable magnetic field generator (9), wherein the transmitter (1) and the receiver (2) are on a common measuring strip (11) forming a measurement track and are spaced from each other by a exchangeable distance L, while simultaneously the transmitting and receiving systems are connected to each other by means of the speed analyser (7), which comprises a visualizer (10) of the speed measurement result.

6. The device for contactless measurements of the speed of moving objects according to claim 5 **characterised in that** the magnetic field transmitter (1) is provided with at least one terminal (12) for generating a magnetizing pulse.

7. The device for contactless measurements of the speed of moving objects according to claim 5 or 6, **characterised in that** the magnetic field transmitter (1) is provided with two terminals (12) for simultaneous generating two magnetizing pulses.
